# EUROPEAN PATENT APPLICATION

(11) **EP 1 492 316 A2**
(43) Date of publication of application: **29.12.2004**
(21) Application number: 04014894.2
(22) Date of filing: 24.06.2004
(51) Int. Cl.: H04M 1/725

(54) **Communication terminal apparatus and program for communication control process**

(30) Priority: 25.06.2003 JP 2003180522
(71) Applicant: Casio Computer Co., Ltd., Shibuya-ku, Tokyo 151-8543 (JP)
(72) Inventor: Matsumoto, Shunichi, Casio Computer Co. Ltd., Hamura-shi, Tokyo 205-8555 (JP)
(74) Representative: Grünecker, Kinkeldey, Stockmair & Schwanhäusser Anwaltssozietät

(57) **Abstract**

An apparatus comprises a memory for storing plural sorts of profiles, each including plural parameters for specifying a specification with respect to an incoming call, and a controller for reading out one sort of profile from among the plural profiles stored in the memory to set the same as a current profile, and for performing an incoming control process based on the current profile upon receipt of the incoming call.

## Description

The present invention relates to a communication terminal apparatus and a program for a communication control process in the communication terminal apparatus, and more particularly relates to specifications of operations to be performed at the time of receipt of an incoming call in the communication terminal apparatus and the communication control process program for executing the operations.

A communication terminal device represented by a cellular phone is carried with a user, and is used in various different situations. Many technologies have been proposed for processing an incoming call in the cellular phone in various situations

For example, an arrangement is disclosed in Japanese Laid Open Patent Specification No.H10-341464, which arrangement automatically executes a process of notifying or signaling an incoming call in accordance with situations in which the cellular phone is used. For more detail, in the disclosed arrangement, data of sampled sound pressure of surrounding noises at the time of an incoming call is compared with previously prepared sound-pressure sampling data in the cellular phone, and an incoming-call notifying or signaling manner is determined based on the result of the comparison and further when it is determined that the incoming call is notified with a sound, a sound volume thereof is controlled based on the result of the comparison, too.

A system is disclosed in Japanese Laid Open Patent Specification No.2000-253465, which is proposed to prevent use of a communication terminal device from giving unpleasantness to the surroundings, and in which radio control equipment is installed in a place such as in a train, a conference room, or a concert hall, where a notifying sound or a ringing tone notifying of an incoming call can give unpleasantness to the surroundings, and the radio control equipment sends communication terminal devices a terminal setting signal and a situation-information signal. Further in the system, an incoming function and an automatic answering function suitable for the place where the communication terminal device is used are automatically set to the communication terminal device receiving these signals, releasing the user from troublesome manipulation in setting the device and notifying the incoming call in a manner most suitable for the situation. In such automatic answering function, information such as information of surroundings and information of a time around which the user is available may be included in the answering message, giving a calling party less unpleasantness.

In general, business persons each have a life pattern such as that he or she takes a train to work in the morning, works in the office in the day time, again takes a train to home in the evening and goes to bed in the night. Therefore, an average person using the cellular phone desires to use it under conditions most suitable for his or her life style. In particular, since it depends on the calling party when a phone call is made, the user of the cellular phone is required to pay much attention in setting his or her cellular phone to a state suitable for situation in which he or she receives an incoming call.

In the conventional technology, it is possible to set the cellular phone to a suitable state depending on the surroundings, but it is impossible to set the cellular phone into states in harmony with his or her life style. Further, it will invite another problems that raise prices of the cellular phones and require much construction costs to establish the system including the radio control equipment disclosed in the Japanese Laid Open Patent Specification No.2000-253465.

For example, in the arrangement of the Japanese Laid Open Patent Specification No.H10-341464, it is necessary to previously prepare and set the sound-pressure sample data including sound pressures and frequency components to be compared with sampled data. The arrangement will require much development costs and need a memory of a large memory capacity for storing much sound-pressure sample data. Meanwhile, in the arrangement of the Japanese Laid Open Patent Specification No.2000-253465, the radio control equipment must be installed at various places, and a design of a controller in the cellular phone will be restricted by specifications of the radio control equipment.

The present invention has been made to solve the problems involved in the conventional technologies. The present invention has purposes to provide a communication terminal apparatus and a program for the communication control process, which realizes operation environments most suitable for users' various life styles, with usage of the existing resources provided in the communication terminal apparatus such as the cellular phones, at a low product price and requiring no expensive development costs.

According to one aspect of the invention, there is provided an arrangement which stores plural sorts of incoming-call specification information, each including plural parameters for specifying operation to realize at least one specification, reads out one sort of incoming-call specification information from among the plural sorts of incoming-call specification information to set the same as a current specification information, and controls the operation to realize a corresponding specification.

With the above described arrangement in a communication terminal apparatus as a cellular phone, operation environments which are most suitable for users' various life styles are realized with usage of the existing resources provided in the cellular phones, at a low product price and requiring no expensive development costs.
Fig. 1 is a block diagram illustrating a circuit configuration of a cellular phone used in embodiments of the present invention.
Fig. 2 is a view illustrating area map of a memory in the embodiments of the invention.
Fig. 3 is a main flow chart of a main process executed in a first embodiment.
Fig. 4 is a flow chart of a timer interrupt 1 in the first embodiment.
Fig. 5 is a flow chart of a timer interrupt 2 in the first embodiment.
Fig. 6 is a flow chart showing a key operation in part in the first embodiment.
Fig. 7 is a flow chart showing the key operation in part in the first embodiment.
Fig. 8 is a flow chart showing the key operation in part in the first embodiment.
Fig. 9 is a flow chart showing the key operation in part in the first embodiment.
Fig. 10 is a flow chart showing the key operation in part in the first embodiment.
Fig. 11 is a flow chart showing the key operation in part in the first embodiment.
Fig. 12a is a view illustrating a profile function screen.
Fig. 12b is a view illustrating a profile selection screen.
Fig. 12c is a view illustrating a profile registration screen.
Fig. 13 is a view illustrating by way of example profile data registered in the memory shown in Fig. 1.
Fig. 14 is a flow chart of an incoming-call process in part in the first embodiment.
Fig. 15 is a flow chart of the incoming-call process in part in the first embodiment.
Fig. 16 is a flow chart of the incoming-call process in part in the first embodiment.
Fig. 17 is a flow chart of a timer interrupt 3 in the first embodiment.
Fig. 18 is a flow chart illustrating an incoming-mail process in part in the first embodiment.
Fig. 19 is a flow chart illustrating the incoming-mail process in part in the first embodiment.
Fig. 20 is a flow chart of a timer interrupt 4 in the first embodiment.
Fig. 21 is a flow chart of a timer interrupt 5 in a second embodiment.
Fig. 22 is a view showing a table including time zones corresponding respectively to environments in which the cellular phone is used.
Fig. 23 is a flow chart of a timer interrupt 6 in a third embodiment.
Fig. 24 is a view showing a table including latitudes and the longitudes for specifying environments in which the cellular phone is used.

A communication terminal apparatus according to the present invention, for example, a cellular phone will be described with reference to a first through fourth embodiments illustrated in the accompanying drawings.

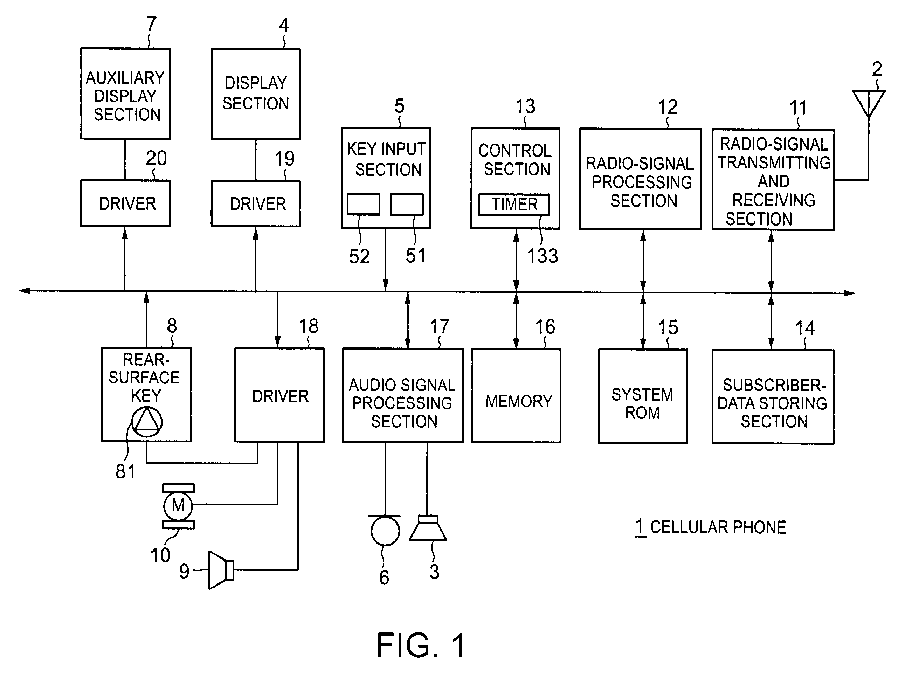

Fig. 1 is a block diagram illustrating a circuit configuration of a cellular phone 1 in the first through fourth embodiments of the present invention. The mechanical structure of the cellular phone will be described first. On a body casing (not shown) of the cellular phone 1 are provided a transmitting and receiving antenna 2, a speaker 3 for outputting voices, a display section 4 including a color liquid crystal display, a key input section 5, a microphone 6 for inputting voices, an auxiliary display section 7 including a monochrome liquid crystal display and the like, a rear-surface key 8, and a speaker 9 for generating a ringing tone or incoming-call sound to give notice of an incoming call. The key input section 5 comprises an off-hook key 51 and on-hook key 52, in addition to ten keys, a clear key, a transmission key and the like (not shown). The rear-surface key 8 is made of a transparent or semi-transparent member and has a built-in LED 81, which is turned on in a flashing manner in response to receipt of an incoming call. A vibrator 10 is built in the body casing for giving a notice of an incoming call by vibration.

Now, an electric configuration of the cellular phone 1 will be described with reference to Fig. 1. A radio-signal transmitting and receiving section 11 transmits and/or receives modulated voice data and other data through the antenna 2. A radio-signal processing section 12 demodulates the voice data and other data received by the radio-signal transmitting and receiving section 11, and modulates the voice data and other data to be transmitted by the radio-signal transmitting and receiving section 11. A control section 13 serves to control whole sections within the cellular phone 1, and has a built-in timer 131 for counting a time duration of the incoming call.

A subscriber-data storing section 14 comprises an address-book area, an incoming-call history area, and an outgoing-call history area. A system ROM 15 stores a communication-process program to be executed by the control section 13, voice synthesis data for an automatic answering purpose, and other various initial data. A memory 16 serves as a work area for temporarily storing data to be processed by the control section 13.

An audio-signal processing section 17 converts a digital voice signal in telephone communication and a digital voice signal of synthesis voice data into analog signals and to supply the analog signal to the speaker 3 to generate a sound, and further converts an analog audio signal from the microphone 6 into digital data to be supplied to the control section 13. A driver 18 drives LED 81 of the rear-surface key 8, the speaker 9, and the vibrator 10. A driver 19 drives the display section 4. A driver 20 drives the auxiliary display section 7.

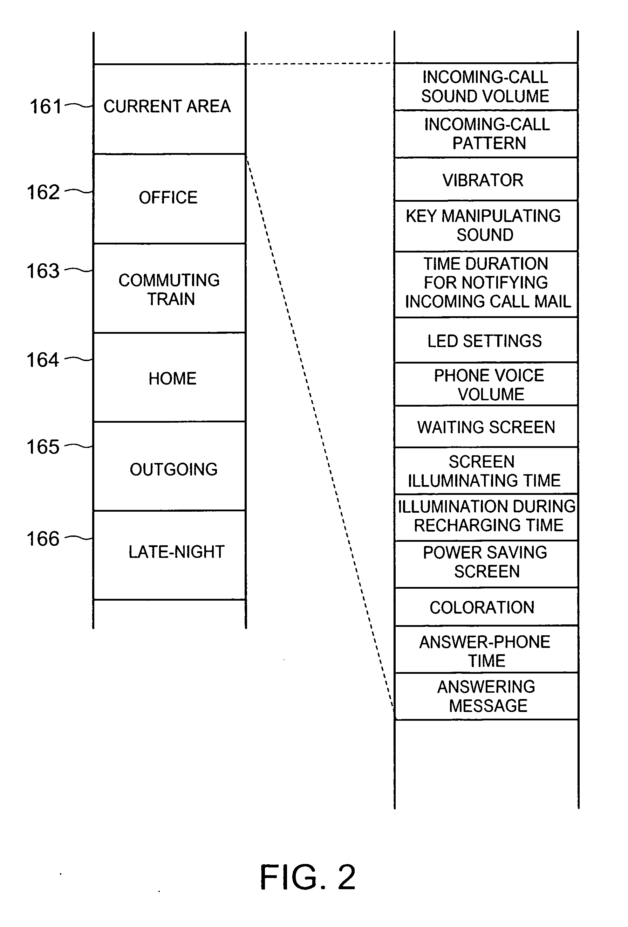

Fig. 2 is a view illustrating an area map of the memory 16 used in respective embodiments of the invention. As shown in Fig. 2, the memory 16 is provided with a current area 161 for storing incoming-call specification information, phone-voice volume specification information, a display specification at time of waiting for a phone call, a display specification at time of phone recharging, a display specification for a display screen to be displayed in a power saving mode, and a specification for recording a message left in an answer-phone (a "profile"), for current environments under which the cellular phone is used. In addition to the above current area 161, the memory 16 is further provided with a office area 162, a commuting train area 163, a home area 164, an outgoing area 165, and a late-night area 166, for storing incoming-call specification information and other specification information for various environments in which the cellular phone is used. In each area of the memory 16 are stored several parameters for defining various specifications such as the incoming-call specification, the display specifications, and the like.

The parameters to be stored in the memory 16 include those for a "incoming-call volume", an "incoming-call pattern" for setting a ringing tone and a ringing melody, a "vibrator", a "key manipulating sound", a "time duration for notifying an incoming call" for setting a time duration for notifying an incoming mail, "LED settings" for setting a light emitting pattern of the LED 81 included in the rear-surface key 8, a "phone-voice volume", a "waiting screen" for setting a calendar or a fixed wallpaper as a display screen to be displayed during a time period for waiting for a phone call, a "screen illuminating time" for setting a time duration in which the display screen is kept illuminated, a "illumination during recharging time" for setting illumination "ON" or "OFF" during phone recharging, a "power saving screen" for setting "ON" or "OFF", a "coloration" for setting coloration of the display screen, and an "answer-phone time" for setting a time for bringing an answer-phone function active, and parameters for an "answering message" for selecting an answering message.

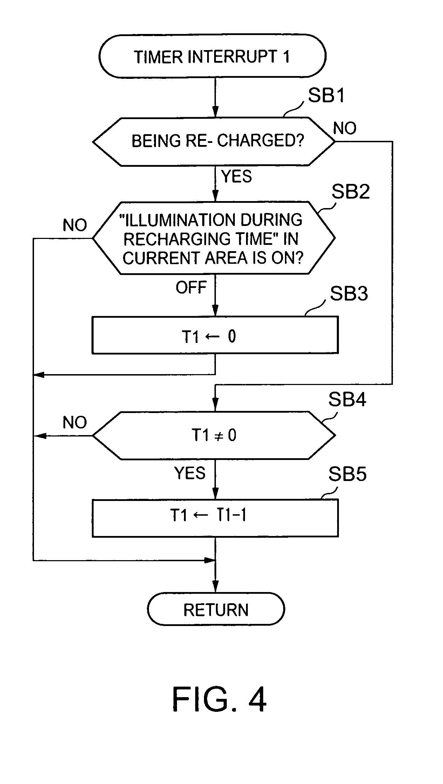

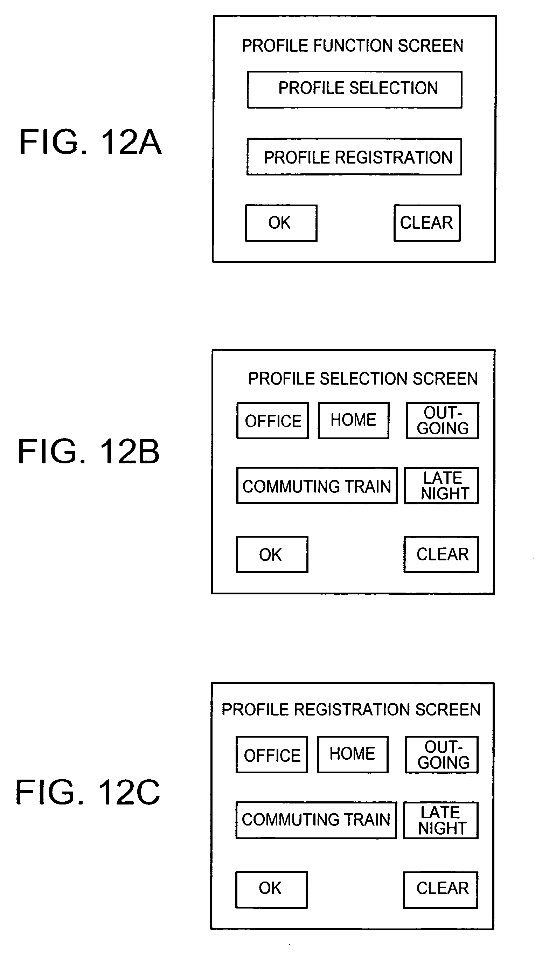

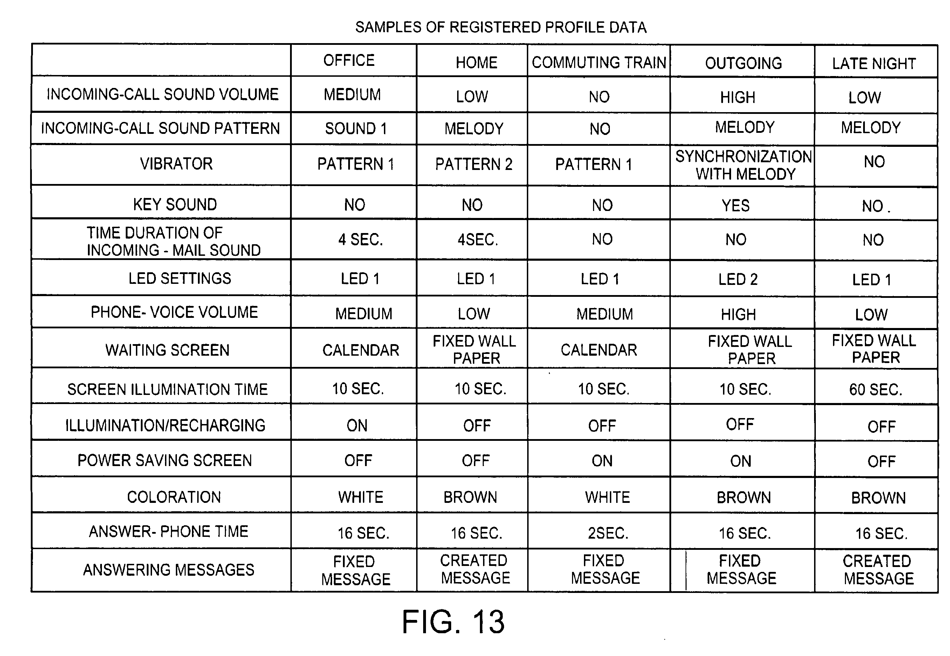

Now, a communication control process in the first embodiment of the invention will be described with reference to flow charts shown in Fig. 4 through Fig. 11, and Fig. 13 through Fig. 20, and display screens illustrated in Figs. 12a to 12c and the profile for various environments in which the cellular phone is used, as shown in Fig. 13.

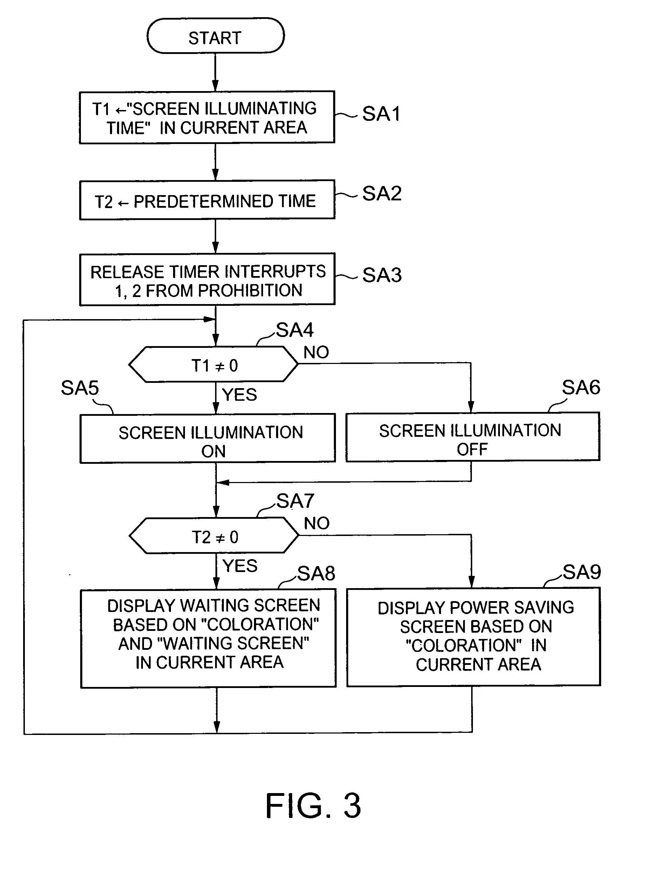

Fig. 3 is a main flowchart showing a main process to be executed by the control section 13 shown in Fig. 1. The "screen illuminating time" stored in the current area 161 of the memory 16 is stored in a time register T1 at step SA1, and data representing a predetermined time is stored in a time register T2 at step SA2. Timer interrupts 1 and 2 respectively for the time registers T1 and T2 are released from prohibition at step SA3. Thereafter, the time registers T1 and T2 are decremented every timer interrupt of a predetermined time (a "timer minimum time unit").

When an interrupt which is caused by an key operation, an incoming call, or an incoming mail has been detected while a loop process of step SA4 through step SA9 is performed, a process pursuant to the detected interrupt is performed. During the loop process, it is judged at step SA4, if "T1 ≠ 0" is true. When "T1 ≠ 0" is true, a display-screen illumination for the display section 4 is turned on at step SA5. Meanwhile, when the time register T2 has reached a value of "0", the display-screen illumination for the display section 4 is turned off at step SA6. At step SA7, it is judged if "T2≠0" is true. When "T2≠0" is true, a waiting screen is displayed at step SA8 based on the contents of the "coloration" and the "waiting screen" stored in the current area 161 of the memory 16. When the time register T2 has reached a value of "0", a power saving screen is displayed at step SA9 based on the contents of the "coloration" stored in the current area 161. After the waiting screen or the power saving screen has been displayed, the loop process set forth above is repeatedly performed.

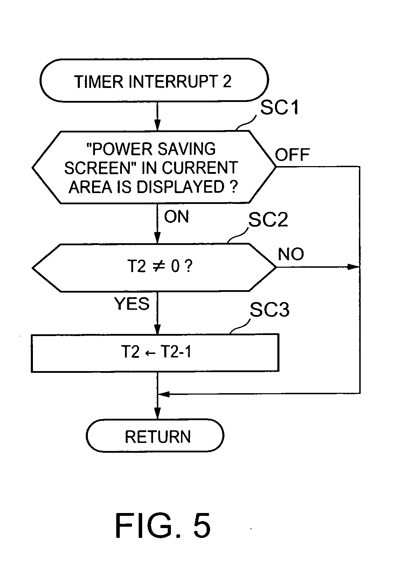

Fig. 4 and Fig. 5 are flow charts showing the processes of the timer interrupt 1 and the timer interrupt 2, respectively.
In the flowchart of the process of the timer interrupt 1 shown in Fig. 4, it is judged at step SB 1 whether or not the cellular phone is being recharged. When the cellular phone is being recharged, it is further judged at step SB2 whether the "illumination during recharging time" of the current area 161 is turned on or off. When the "illumination during recharging time" is turned off, a value of "0" is stored in the time register T1 at step SB3, and the process returns to the main process shown in Fig. 3. Therefore, since the time register T1 has been set to a value of "0", the screen illumination is turned off at step SA6. When it is determined at step SB6 (Fig. 4) that "illumination during recharging time" of the current area 161 is turned on, the process returns to the main process shown in Fig. 3. That is, the screen illumination keeps ON during a phone recharging time.
When it is determined at step SB1 that the cellular phone is not being recharged, it is judged at step SB 4, if "T2≠0" is true. When "T2≠0" is true, the time register T1 is decremented by "1" at step SB5, and the process returns to the main process shown in Fig. 3.

In the timer interrupt 2 shown in Fig. 5, it is judged at step SC1 whether the "power saving screen" is turned ON or OFF. When the "power saving screen" is turned OFF, the process returns to the main process. When the "power saving screen" is turned ON, it is judged at step SC2 if "T2≠0" is true. When T2 = 0, the process returns to the main process, and when "T2 ≠0" is true, the time register T2 is decremented by "1" at step SC3, and then the process returns to the main process. That is, in case that the "power saving screen" stored in the current area is turned ON, when the time register T2 reaches a value of "0", the communication control process goes to the power saving screen.

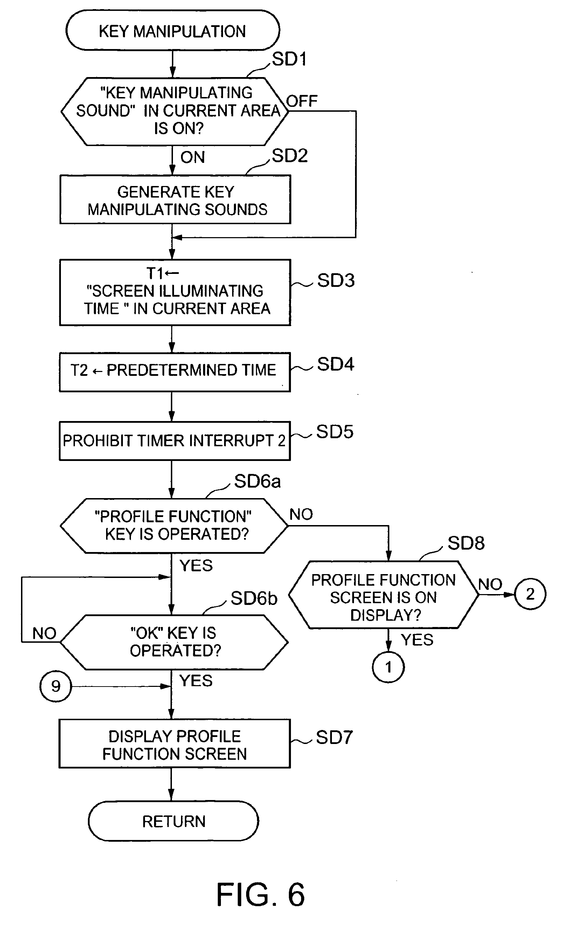

Fig. 6 through Fig. 11 are flow charts illustrating the key operation. In Fig. 6, it is judged at step SD1 whether the "key manipulating sound" is ON or OFF. When the "key manipulating sound" is ON, the key manipulating sounds are generated at step SD2. Then, the "screen illumination time" of the current area is stored in the time register T1 at step SD3, and a predetermined time is stored in the time register T2 at step SD4. At step SD5, the timer interrupt 2 is prohibited. That is, when any of the keys in the key input section 5 is operated, the power saving screen is not made active until the key operation is finished.

It is judged if either of the keys has been operated. It is judged at step SD6a if a "profile function" key has been operated or not. When the "profile function" key has been operated, then further it is judged at step SD6b if an "OK" key has been operated or not. When the "OK" key has been operated, a profile function screen is displayed at step SD7, and then the process returns to the main process, where a following key operation is waited for. Fig. 12a is a view illustrating the profile function screen. On the profile function screen, there are displayed a "profile selection" key, a "profile registration" key, an "OK" key, and a "clear" key. When the "profile function" key has not been operated, it is judged at step SD8 whether the profile function screen is on display or not.
When either of the selection keys displayed on the profile function screen is operated and further the "OK" key is operated, then the operated selection key is decided. But although the "OK" key is operated to determine such selection key every time either of the selection keys is operated, explanation and drawings of the "OK" key operation will hereinafter be omitted for simplicity.

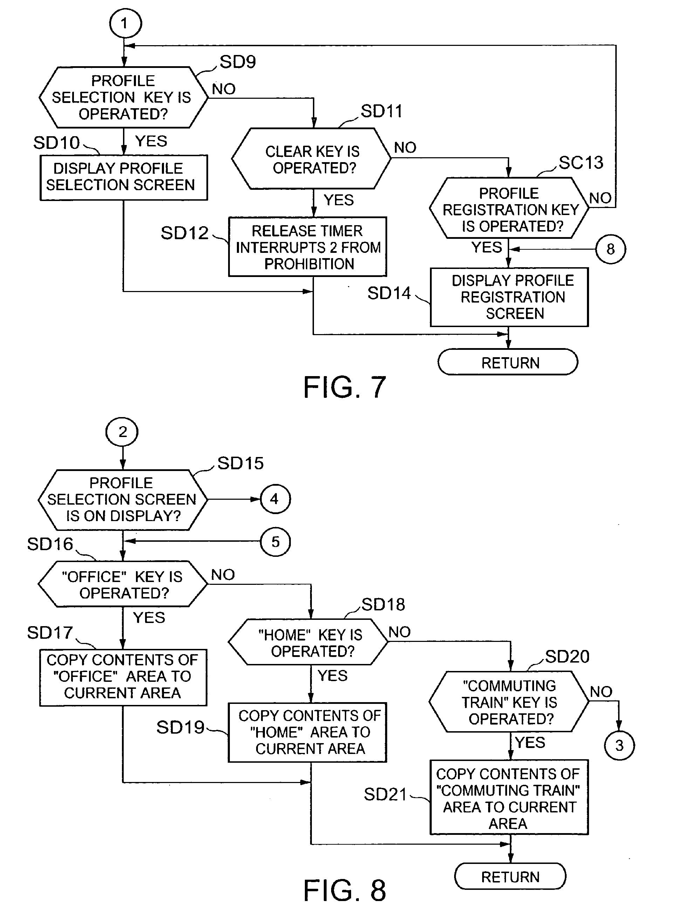

When the profile function screen is on display, it is judged at step SD9 in the flow chart of Fig. 7, whether the "profile selection" key has been operated or not. When the "profile selection" key has been operated, the profile selection screen is displayed at step SD10. Fig. 12b is a view illustrating the profile selection screen. Then, the process returns to the main process, where a following key operation is waited for. On the profile selection screen there are displayed a "office" key, a "home" key, a "commuting train" key, a "outgoing" key, a "late night" key, an "OK" key and a "clear" key.

When it is determined at step SD9 that the "profile selection" key is not operated, it is judged at step SD11 whether or not the "clear" key has been operated. When the "clear" key has been operated, since the key operation is completed, the timer interrupt 2 is released from prohibition at step SD12, and the process returns to the main process. When the "clear" key is not operated, it is judged at step SD13 whether or not the "profile registration" key has been operated. When the "profile registration" key has been operated, the profile registration screen is displayed at step SD14, and the process returns to the main process. Fig. 12c is a view illustrating the profile registration screen. On the profile registration screen, there are displayed a "OK" key, and a "clear" key together with keys for designating various environments in which the cellular phone is used, in a similar manner to the Fig. 12c. When no key on the profile registration screen is operated, the process returns to step SD9, where a key operation is waited for.

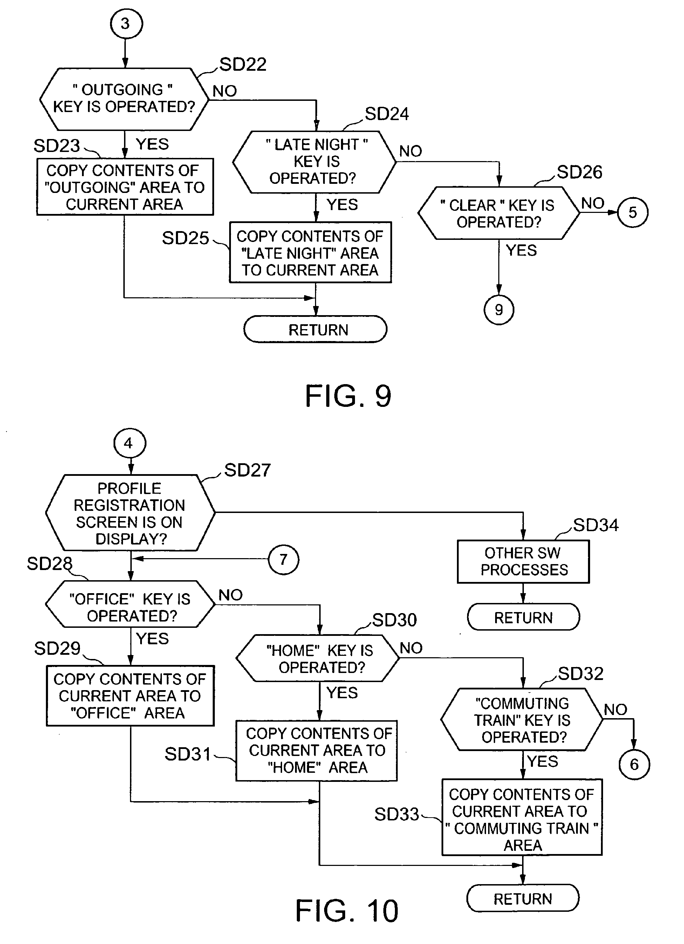

When it is determined at step SD8 in Fig. 6, that the profile function screen is not on display, it is judged at step SD15 in Fig. 8 whether the profile selection screen shown in Fig. 12b is on display. When the profile selection screen is on display, then it is judged whether or not either of the keys displayed on the profile selection screen has been operated. At step SD16, it is judged whether the "office" key has been operated. When the "office" key has been operated, contents of the "office" area are copied to the current area at step SD17, and then the process returns to the main process.
When the "office" key has not been operated, it is judged at step SD 18 whether the "home" key has been operated or not. When the "home" key is selected, contents of the "home" area are copied to the current area at step SD19, and then the process returns to the main process.
When the "home" key has not been operated, it is judged at step SD 20 whether the "commuting train" key has been operated or not. When the "commuting train" key is selected, contents of the "commuting" area are copied to the current area at step SD21, and then the process returns to the main process.
When the "commuting train" key has not been operated, it is judged at step SD 22 in Fig. 9 whether the "outgoing" key has been operated or not. When the "outgoing" key is selected, contents of the "outgoing" area are copied to the current area at step SD23, and then the process returns to the main process. When the "outgoing" key has not been operated, it is judged at step SD 24 whether the "late night" key has been operated or not. When the "late night" key is selected, contents of the "late night" area are copied to the current area at step SD25, and then the process returns to the main process. When the "late night" key has not been operated, it is judged at step SD 26 whether the "clear" key has been operated or not. When the "clear" key is selected, the process goes to step SD7 of Fig. 6, where the profile function screen is displayed. When neither of the keys on the profile function screen is operated, the process goes to step SD16 in Fig. 8, where a following key operation is waited for.
As described above, when the profile selection screen is on display, and either of the "office" key, "home" key, "commuting train" key, "outgoing" key and the "late night" key is selected, the environment selected by operating one of the above mentioned keys is set to the current area as the current environment under which the cellular phone is used.

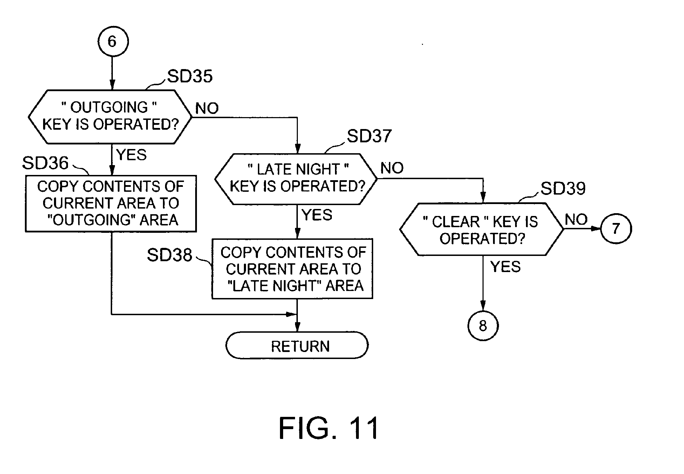

When it is determined at step SD 15 in Fig. 8 that the profile is not on display, it is judged at step SD27 in the flow chart of Fig. 10 whether the profile registration screen shown in Fig. 12c is on display or not. When the profile registration screen is on display, it is judged whether or not either of the keys is operated.
When it is judged at step SD28 whether or not the "office" key has been operated, and the "office" key is selected, then contents of the current area are copied to the "office" area at step SD29, and the process returns to the main process.
When the "office" key is not operated, it id judged at step SD30 whether or not the "home" key has been operated. When the "home" key is selected, then contents of the current area are copied to the "home" area at step SD31, and the process returns to the main process.
When the "home" key is not operated, it is judged at step SD32 whether or not the "commuting train" key has been operated. When the "commuting train" key is selected, then contents of the current area are copied to the "commuting train" area at step SD33, and the process returns to the main process.
When the "commuting train" key is not operated, it is judged at step SD35 in the flow chart of Fig. 11 whether or not the "outgoing" key has been operated. When the "outgoing" key is selected, then contents of the current area are copied to the "outgoing" area at step SD36, and the process returns to the main process.
When the "outgoing" key is not operated, it is judged at step SD37 whether or not the "late night" key has been operated. When the "late night" key is selected, then contents of the current area are copied to the "late night" area at step SD38, and the process returns to the main process.
When the "late night" key has not been operated, it is judged at step SD 39 whether the "clear" key has been operated or not. When the "clear" key is selected, the process goes to step SD14 of Fig. 7, where the profile registration screen is displayed. When neither of the keys on the profile selection screen is operated, the process goes to step SD28 in Fig. 10, where a key operation is waited for.
As described above, when the profile registration screen is on display, and either of the "office" key, "home" key, "commuting train" key, "outgoing" key and the "late night" key is selected, the contents set to the current area are registered as the selected environment in which the cellular phone is used.

Fig.13 is a view showing by way of example parameters registered in the "office" area, the "home" area, the "commuting train" area, the "outgoing" area, and the "late night" area of the memory 16, or As described above, the memory 16 has the current area for storing the profile including plural parameters which are set by a user' s operation, and the profile stored in the current area are, in response to environment selecting operation, transferred to and stored in environment areas corresponding respectively to various environments in which the cellular phone is used.

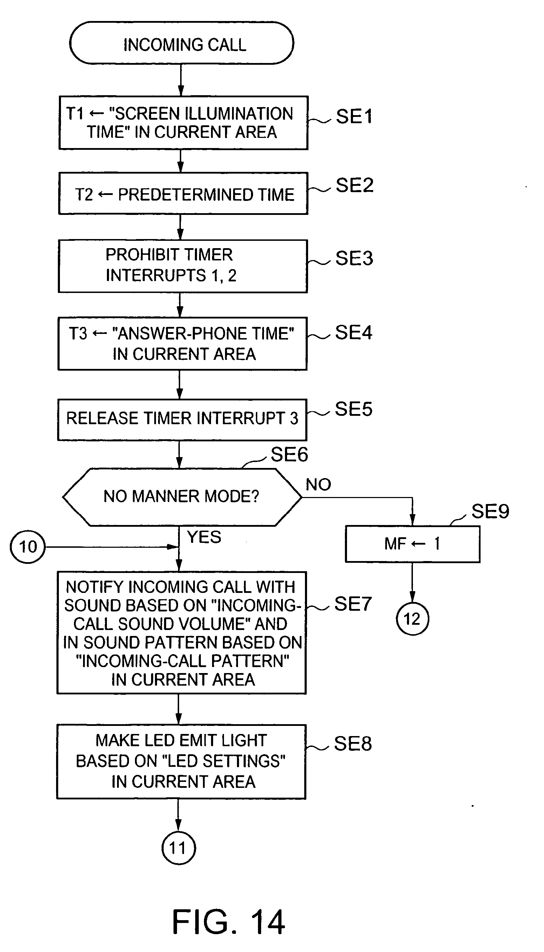

Fig. 14 through Fig. 17 are flow charts for the incoming call. At step SE1 in the flow chart of Fig. 14, the "screen illuminating time" stored in the current area is stored in the time register T1, and at step SE2, data representing a predetermined time is stored in the time register T2. Then, the timer interrupt 1 and the timer interrupt 2 are prohibited at step SE3. The answer-phone time of the current area is stored in a time register 3 at step SE4, and the timer interrupt 3 is released from prohibition at step SE5. In other words, when the incoming call is received, the screen illumination is kept on and the screen is not turned to the power saving screen until occurrence of off-hook or an answering message of the answer phone.

It is judged at step SE6, whether a manner mode or a silent mode has been set at present. When the manner mode has not been set, an incoming call is notified at step SE7 with the incoming-call sound or the ringing tone of a sound volume specified based on the "incoming-call volume" stored in the current area and in a manner spacified by the sound pattern based on the "incoming-call pattern" stored in the current area. Further, to notify the incoming call at step SE8, the LED emits light in a light emitting pattern depending on contents of "LED settings" stored in the current area. Meanwhile, it is determined that the manner mode has been set at present, a flag MF is set to "1" at step SE9.

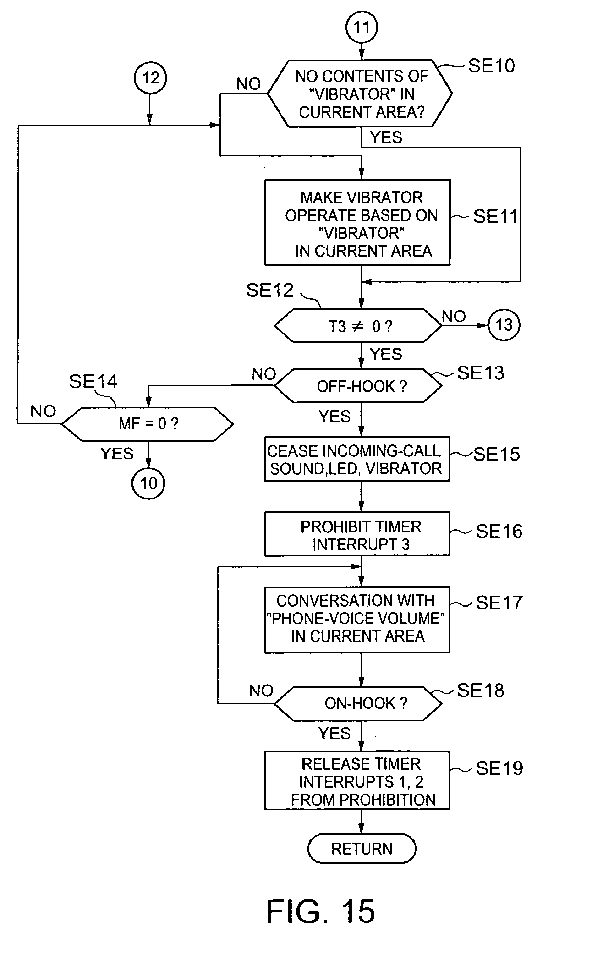

After the incoming call has been notified with the incoming-call sound at step SE 7 and the light at step SE8, it is judged at step SE10 in Fig. 15 whether or not the contents of the "vibrator" in the current area indicate "no vibration". When the contents of the "vibrator" indicate "with vibration" including "pattern 1", "pattern 2", or "with melody", the vibrator operates in a pattern based on the contents of the "vibrator" at step SE11. When the flag MF has been set to "1 (manner mode)" at step SE9 in Fig. 14, the incoming call is not notified with the incoming-call sound, and the process advances to step SE11 in Fig. 15, where the vibrator operates in the pattern depending on the contents of "vibrator" in the current area.

At step SE12, it is judged if T3≠0 is true. When T3 ≠0 is true, that is, when a time limit at which the phone is switched to an automatic answering phone has not been reached after a notice of an incoming call, then it is judged at step SE13 if the off-hook has been occurred. When the off-hook has not been occurred, it is judged at step SE14 whether the flag MF is set to "0" or "1". When the flag MF is set to "1", that is, when the manner mode has been set, the vibrator keeps its operation for notifying an incoming call at step SE11. When the flag MF is set to "0", i.e., when the manner mode has not been set, the process goes to step SE7 in Fig. 14, where the incoming-call sound keeps sounding to notify the incoming call.

When the off-hook has occurred at step SE13 in Fig. 15, then the incoming-call sound, the light emitting by LED, and operation of the vibrator cease at step SE15. The timer interrupt 3 is prohibited at step SE16. Then the phone goes to a conversation mode, where a conversation process is performed based on the "phone-voice volume" in the current area at step SE17. In the conversation mode, it is judged at step SE18 whether the off-hook has been occurred or not. When the off-hook has not been occurred, the conversation process goes on. When the off-hook has been occurred, the timer interrupts 1 and 2 are released from prohibition at step SE19, and the process returns to the main process.

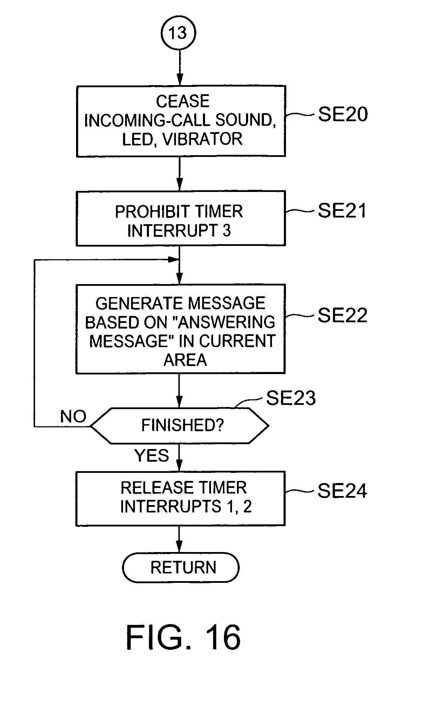

When it is determined at step SE12 that T3 has reached "0", then the incoming-call sound, the light emitting by LED, and operation of the vibrator cease at step SE20 in Fig. 16, and the timer interrupt 3 is prohibited at step SE21. Thereafter, the phone goes to the conversation mode, where a message is generated depending on the "answering message" in the current area at step SE22. It is judged at step SE23 if the message has finished, and when the message has not finished, the message keeps sounding. When the message has finished, the timer interrupts 1 and 2 are released from prohibition at step SE24, and the process returns to the main process.

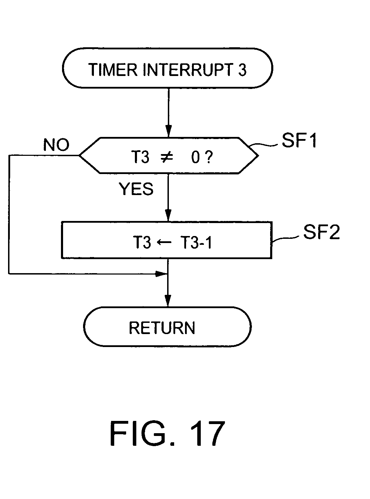

Fig. 17 is a flow chart of the timer interrupt 3. It is judged at step SF1 if T3≠0 is true. When T3≠0 is true, the time register T3 is decremented by "1" at step SF2, and the process returns to the main process. That is, a time is counted from the receipt of incoming call until the off-hook occurs or until the phone is switched to the answer-phone process.

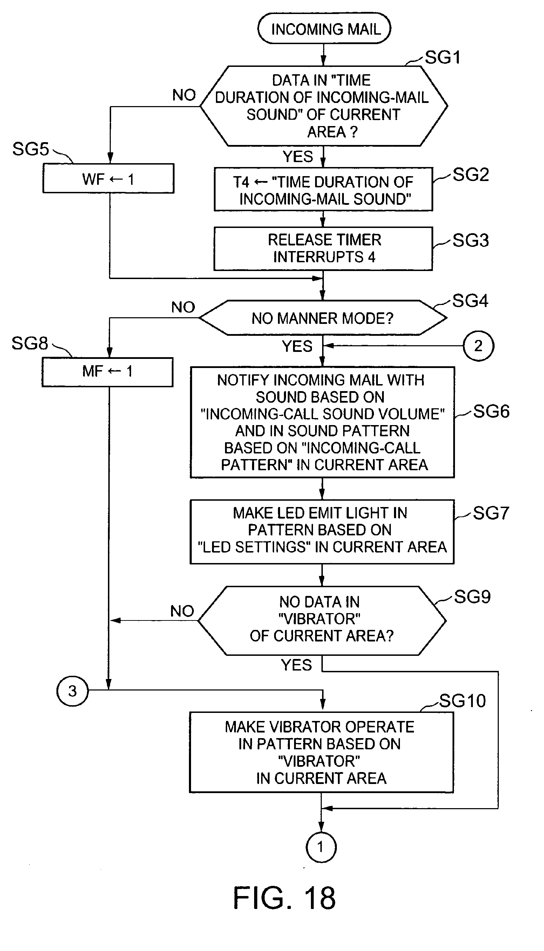

Fig. 18 through Fig. 20 are flow charts for the incoming mail. It is judged at step SG1 in Fig. 18 whether there is included any data in the "time duration for notifying incoming call" in the current area. When there is included data in the "time duration for notifying incoming call" in the current area, the "time duration for notifying an incoming call" is stored in a time register T4 at step SG2, and the timer interrupt 4 is released from prohibition at step SG3. Meanwhile, when there is included no data in the "time duration for notifying incoming call", a flag WF is set to "1 (waiting for off-hook)" at step SG4.

After the flag WF has been set to "1", or after the timer interrupt 4 is released from prohibition, it is judged at step SG5 whether the manner mode has not been set or not. When the manner mode has not been set, the incoming mail is notified with sound of a sound volume defined by the "incoming-call volume" in the current area and generated in a sound pattern depending on the "incoming-call pattern", at step SG6. Further, the LED emits light in a light emitting pattern depending on contents of "LED settings" stored in the current area at step SG7. Meanwhile, when the manner mode has been set, the flag MF is set to "1" at step SG8.

After the incoming mail has been notified with the incoming-call sound at step SG6 and with the light at step SG7, it is judged at step SG9 whether or not the contents of the "vibrator" in the current area indicate "no vibration". When the contents of the "vibrator" indicate "with vibration" including "pattern 1", "pattern 2", or "with melody", the vibrator operates in the pattern based on the contents of the "vibrator" at step SG10. When the flag MF has been set to "1 (manner mode)" at step SG8, the incoming mail is not notified with the incoming-call sound, and the process advances to step SG10, where the vibrator operates in the pattern depending on the contents of "vibrator" in the current area.

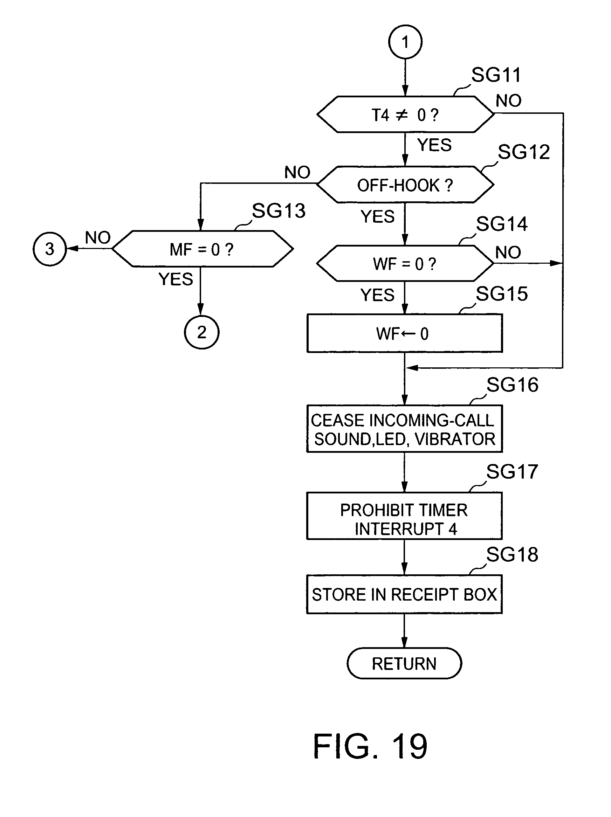

At step SG11 in the flow chart shown in Fig. 19, it is judged if T4≠0 is true. When T4≠0 is true, it is judged at step SG12 if the off-hook has been occurred. When the off-hook has not been occurred, it is judged at step SG13 whether the flag MF is set to "0" or "1". When the flag MF is set to "1", that is, when the manner mode has been set, the vibrator keeps its operation to notify the incoming mail at step SG10 in Fig. 18. When the flag MF is set to "0", i.e., when the manner mode has not been set, the process goes to step SG6 in Fig. 18, where the incoming-mail sound keeps sounding to notify the incoming mail.

When the off-hook has occurred at step SG12, it is judged at step SG12 whether the flag WF is set to "1" or not. When the flag WF is set to "1", the flag WF is reset to "0" at step SG15. After the flag WF has been reset, or when the flag WF is set to "0", or when the time register T4 has reached "0" at step SG11, then the incoming-call sound, the light emitting by LED, and operation of the vibrator cease at step SG16, and the timer interrupt 4 is prohibited at step SG17. The incoming mail is stored in a receipt box at step SG18, and the process returns to the main process.

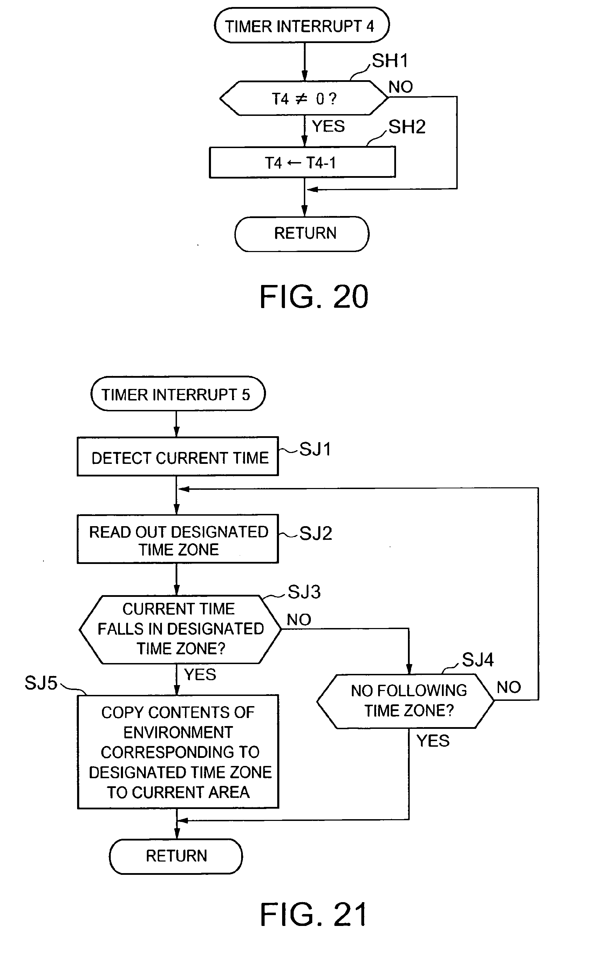

Fig. 20 is a flow chart of the timer interrupt 4. It is judged at step SH1 if T4≠0 is true. When T4≠0 is true, the time register T4 is decremented by "1" at step SH2, and the process returns to the main process. That is, a time duration for notifying the incoming mail is counted. For example, when the environment in which the phone is used is designated as "office" or "home", a time of 4 seconds, which is set as the time duration for "office" or "home", is counted.

In the first embodiment set forth above, there are provided the memory 16, which stores plural sorts of profiles each including plural parameters for defining specifications with respect to the incoming call, and the control section 13, which reads out one sort of profile out of the plural sorts of profiles stored in the memory 16, and sets the read out profile as the current profile, and controls an incoming-call process based on the current profile. Therefore, with usage of the existing resource or the memory of a small capacity provided in the communication terminal apparatuses such as the cellular phones, the present invention allows the user of the cellular phone to enjoy advantages of incoming-call states suitable for his or her various life styles, at a low product price and requiring no expensive development costs.

Further, in the first embodiment, the control section 13 has the configuration that reads out one sort of profile which has been selected on the profile selection screen of Fig. 12b in response to operation by the user, and that stores the read out profile in the current area as the current profile. But the control section may be modified so as to have such configuration that automatically reads out one sort of profile out of the plural sorts of profiles stored in the memory 16 in accordance with the environment in which the phone is used, and stores the same in the current area.
Hereafter, an embodiment will be described in which a profile is automatically set in accordance with the environment in which the phone is used.

In a second embodiment of the invention, time zones designated for various environments in which the cellular phone is used are stored respectively in the areas such as the "office" area, "home" area, "commuting train" area, "outgoing" area and "late night" area in the area map of the memory 16 illustrated in Fig. 2. In the second embodiment, the process as executed in the first embodiment for selecting the environment in which the cellular phone is used on the profile selection screen of Fig. 12b and for storing the selected environment in the current area is not executed in the flow chart of the key operation, but one sort of profile is automatically read out from the memory 16 in accordance with the designated time zone and stored in the current area.

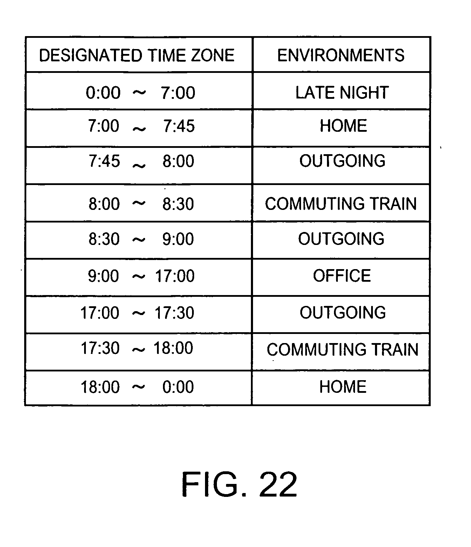

Fig. 21 is a flow chart of a timer interrupt 5 in the second embodiment. At step SJ1, the current time is detected. The designated time is read out from the environment area of the memory 16 at step SJ2, and it is judged at step SJ3 whether or not the current time falls in the range of the designated time zone. When the current time does not fall in the range of the designated time zone, it is judged at step SJ4 whether or not a time zone is stored in the following environment area of the memory 16. When the time zone is stored in the following environment area, the process goes to step SJ2, where it is judged whether or not the current time falls in the range of the designated time zone. When it is determined at step SJ3 that the current time falls in the range of the designated time zone, the contents of the environment corresponding to the designated time are copied to the current area at step SJ5, and the process returns to the main process. Fig. 22 is a view showing, by way of example, designated times corresponding to various environments in which the cellular phone is used.

In the second embodiment described above, the control section 13 reads out one sort of profile depending on the designated time zone, and sets the read out profile in the current area as the current profile. Therefore, with usage of the existing resources or the memory of a small capacity and the time counting function provided in the communication terminal apparatuses such as the cellular phones, the present invention allows the user of the cellular phone to enjoy advantages of incoming-call states suitable for his or her various life styles, at a low product price and requiring no expensive development costs.

Now, a communication control process to be executed in a third embodiment of the invention will be described. In the third embodiment, the environment in which the phone is used at the current position is detected using GPS function of the cellular phone, and the communication control process is executed. For these purposes, data representing a local area defined by latitudes and longitudes is previously stored in each of the areas of the memory 16 such as the "office" area, "home" area, "commuting train" area, "outgoing" area and the "late night" area.

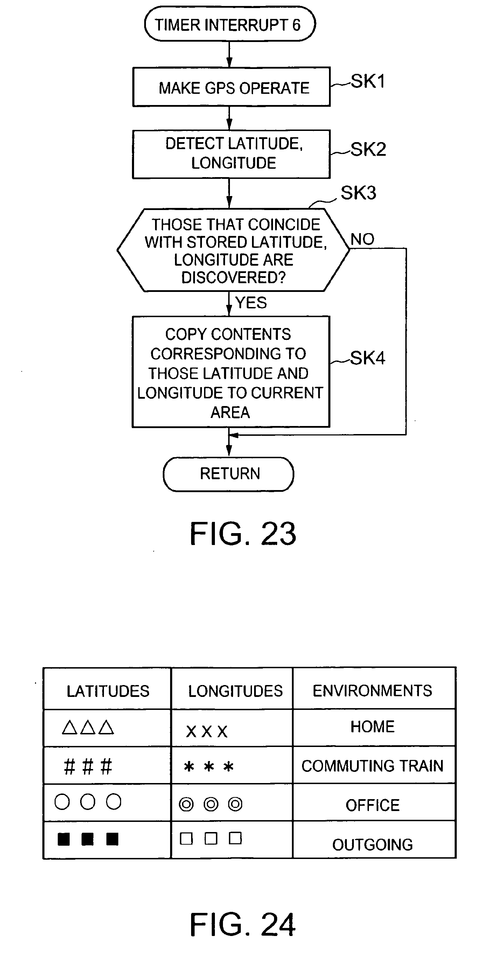

Fig. 23 is a flow chart showing a timer interrupt 6 to be executed in the third embodiment. GPS function is brought into operation at step SK1 to detect the latitude and the longitude of the current location at step SK2. Then, it is judged at step SK3 whether or not those which coincide with the detected latitude and the longitude are discovered in the latitudes and the longitudes stored in the environment areas of the memory 16. When those which coincide with the detected latitude and the longitude are discovered, the contents of environment area where the latitude and the longitude are stored are copied to the current area at step SK4, and the process returns to the main process. Fig. 24 is a view showing by way of example the ranges of the latitudes and the longitudes in the environment areas such as "home" area, "office" area and "outgoing" area. If the latitudes and the longitudes of "commuting train" are registered for each train line, then the environment in which the cellular phone is used may be automatically specified.

In the third embodiment described above, the control section 13 reads out one sort of profile in accordance with the latitude and the longitude of the current location, and sets the read out profile in the current area as the current profile. Therefore, with usage of the existing resource or the memory of a small capacity and the GPS function provided in the communication terminal apparatuses such as the cellular phones, the present invention allows the user of the cellular phone to enjoy advantages of incoming-call states suitable for his or her various life styles, at a low product price and requiring no expensive development costs.

Now, a communication control process to be executed in a fourth embodiment of the invention will be described. In the fourth embodiment, a state in which connecting terminals of the cellular phone is detected and an appropriate communication control process is executed based on the detected state of the connecting terminals. The state in which the cellular phone is used is judged, in other words, for example, it is judged if the cellular phone is received in a cradle for a re-charging purpose, or if an ear-phone is connected thereto, or if a communication connector is connected thereto, and the control process is executed depending on results of the judgments, for example, the vibrator is temporarily switched form ON state to OFF state, or the incoming-call notice is temporarily switched form ON state to OFF state.

In the forth embodiment described above, with usage of the existing resources or the memory of a small capacity and the function for detecting the state of the phone provided in the communication terminal apparatuses such as the cellular phones, the present invention allows, in the similar manner in the first through third embodiments, the user of the cellular phone to enjoy advantages of incoming-call states suitable for his or her various life styles, at a low product price and requiring no expensive development costs.

In the above embodiments, the communication terminal apparatuses have been described, in which the program for the communication control process is previously stored in the built-in system ROM 15 and the control section 13 executes the program previously stored therein. The communication terminal apparatus may be modified such that the program to be executed by the control section 13 is transmitted from an external memory such as a memory stick using a driver previously included therein. Further, the communication terminal apparatus may be modified such that the program for the communication control process is transmitted from external equipment such as an external server through a radio signal processing section including the antenna 2, the radio-signal transmitting and receiving section 11, and the radio-signal processing section 12. In these cases, an invention of a program may be realized.

The program for controlling the communication control process comprises a code for reading out one sort of incoming-call specification information from a memory, which previously stores plural sorts of incoming-call specification information each including plural parameters for specifying an incoming-call specification, and for setting the read out incoming-call specification information as a current incoming-call specification information, and a code for, upon receipt of the incoming call, executing the incoming-call control process based on the current incoming-call specification information.

## Claims

1. A communication terminal apparatus comprising:
a memory (16) for storing plural sorts of specification information, each of which include plural parameters for specifying operation for realizing at least one specification; a specification setting unit (13, SD15-SD25, SJ1-SJ5, SK1-SK4) for selecting and reading out one sort of specification from among the plural sorts of specification information stored in the memory to set the read out sort of specification information as a current specification information; and
a controller (13, SA1-SA9, SB1-SB5, SC1-SC3, SD1-SD5, SE1-SE24, SF1, SF2, SG1-SG18, SH1, SH2) for controlling the operation for realizing a pertinent specification based on the current specification information set by the specification setting unit.

2. The communication terminal apparatus according to claim 1, wherein the specification setting unit (13, SD15-SD25) reads out from the memory one sort of specification specified in response to manipulation of a user, and sets the read out specification information as the current specification information.

3. The communication terminal apparatus according to claim 2, wherein the memory (16) has a setting area (161) and environment areas (162-166), the setting area prepared for storing specification information including plural parameters set in response to manipulation of the user, and transfers, in response to manipulation by the user for specifying an environment for using the communication terminal apparatus, the specification information stored in the setting area to an environment area corresponding to the environment specified by the manipulation by the user to save the same therein.

4. The communication terminal apparatus according to claim 3, wherein the memory (16) transfers either of the plural sorts of specification information stored in the environment areas (162-166) to the setting area (161) to store the same therein.

5. The communication terminal apparatus according to claim 1, wherein the specification setting unit (13, SJ1-SJ5) reads out one sort of specification information in accordance with a time zone for using the communication terminal apparatus, and sets the same as the current specification information.

6. The communication terminal apparatus according to claim 1, wherein the specification setting unit (13, SK1-SK4) reads out one sort of specification information in accordance with a location for using the communication terminal apparatus, and sets the same as the current specification information.

7. The communication terminal apparatus according to claim 1, wherein the memory (16) stores incoming-call specification information including plural parameters for specifying operations to be executed to realize an incoming-call specification for notifying a user of an incoming call.

8. The communication terminal apparatus according to claim 7, wherein the plural parameters are used to specify at least either of a sound volume, a pattern, and a time duration of an incoming-call tone to be generated for notifying the user of an incoming call.

9. The communication terminal apparatus according to claim 7, wherein the plural parameters are used to specify a pattern of a vibration for notifying the user of an incoming call.

10. The communication terminal apparatus according to claim 7, wherein the plural parameters are used to specify a type of a light emitting element for emitting light to notify the user of an incoming call.

11. The communication terminal apparatus according to claim 1, wherein the memory (16) stores phone-conversation voice-volume specification information including plural parameters for specifying operations to be executed to realize a phone-conversation voice-volume specification for a conversation over the communication terminal apparatus.

12. The communication terminal apparatus according to claim 11, wherein the plural parameters are used to specify a level of a phone-call sound volume.

13. The communication terminal apparatus according to claim 1, wherein the memory (16) stores phone-call waiting specification information including plural parameters for specifying operations to be executed to realize a displaying specification for a period in which a phone call is waited.

14. The communication terminal apparatus according to claim 13, wherein the plural parameters are used to specify at least either of a type of a waiting screen to be displayed during a period in which a phone call is waited, a time duration for illuminating the waiting screen and coloration of the waiting screen.

15. The communication terminal apparatus according to claim 1, wherein the memory (16) stores re-charging specification information including plural parameters for specifying operations to be executed to realize a display specification for a time duration in which the communication terminal apparatus is being re-charged.

16. The communication terminal apparatus according to claim 15, wherein the plural parameters are used to determine whether the display screen is illuminated or not during the time duration in which the communication terminal apparatus is being re-charged.

17. The communication terminal apparatus according to claim 1, wherein the memory (16) stores power-saving screen specification information including plural parameters for specifying operations to be executed to realize the power-saving display screen specification for saving power.

18. The communication terminal apparatus according to claim 17, wherein the plural parameters are used to determine whether the power-saving display screen is displayed or not.

19. The communication terminal apparatus according to claim 1, wherein the memory (16) stores answer-phone recording specification information including plural parameters for specifying operations to be executed to realize the answer-phone recording specification for recording when an incoming call is received.

20. The communication terminal apparatus according to claim 19, wherein the plural parameters are used to determine a time by which a recording operation starts and a type of an answering message for the answer phone, when an incoming call is received.

21. A program for a communication control process comprising:
computer code (13, SD15-SD25, SJ1-SJ5, SK1-SK4) for reading out one sort of specification information from a memory (16) in which stores plural sorts of specification information, each including plural parameters for specifying operation to be executed to realize at least one specification, and for setting the read out specification information as a current specification information; and
computer code (13, SA1-SA9, SB1-SB5, SC1-SC3, SD1-SD5, SE1-SE24, SF1, SF2, SG1-SG18, SH1, SH2) for controlling, based on the current specification, the operation to be executed to realize a corresponding specification.
